# EUROPEAN PATENT APPLICATION

(11) **EP 4 503 495 A1**
(43) Date of publication of application: **05.02.2025**
(21) Application number: 23784235.6
(22) Date of filing: 03.04.2023
(51) Int. Cl.: H04L 5/00

(54) **METHOD AND APPARATUS FOR WIRELESS COMMUNICATION**

(30) Priority: 05.04.2022 CN 202210352511
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN)
(74) Representative: Zhang, Fan
(86) International application number: PCT/CN2023/085848
(87) International publication number: WO 2023/193672

(57) **Abstract**

Disclosed in the present invention are a method and apparatus for wireless communication. A first node receives a first wireless signal and a first message, wherein the first message comprises Q configuration parameter groups, and the Q is a positive integer greater than 1; generating at least a target first-type parameter group; and sending a second message and a third message, wherein the second message is used for determining Q1 configuration parameter groups, the Q1 configuration parameter groups are a subset of the Q configuration parameter groups, the Q1 is a positive integer not greater than the Q, and the third message comprises a first report. According to the present application, the transmission efficiency can be improved, or the operation efficiency can be improved; the requirement of nonlinear operation is satisfied, and the operation requirements of existing systems are also satisfied.

## Description

### TECHNICAL FIELD

The present application relates to methods and devices in wireless communication systems, and in particular to a scheme and device for transmitting reports in a wireless communication system.

### BACKGROUND

In traditional wireless communications, the UE (i.e., User Equipment) report may include at least one of a variety of auxiliary information, such as CSI (i.e., Channel Status Information), Beam Management-related auxiliary information, localization-related auxiliary information and so on. The network device selects appropriate transmission parameters for the UE based on the UE's report, such as the cell being camped, Modulation and Coding Scheme (MCS), Transmitted Precoding Matrix Indicator (TPMI), Transmission Configuration Indication (TCI) and other parameters. In addition, UE reporting can be used to optimize network parameters such as better cell coverage, switching base station based on UE location, etc.

In the New Radio (NR) system, the priority of the CSI reports is defined, and the priority is used to determine whether to assign CSI Processing Unit (CPU) resources for updating corresponding CSI reports, or whether to drop the corresponding CSI reports.

### SUMMARY

In NR R (release) 15 and R16, the CSI calculation capability that the UE can perform simultaneously was introduced to determine the number of CSI reports that the UE can update simultaneously. The applicant has found through researches that ML/AI based CSI computation is very different from traditional CSI computation, and both require different computational capabilities. Therefore, when ML/AI-based UE reporting is introduced, how the UE will determine the reports or whether the reports need to be updated or not is a problem that needs to be solved. In this case, how to avoid the waste of computational capability is also a problem to be solved.

To address the above problem, the present application provides a solution. It should be noted that while a large number of embodiments of the present application are illustrated with respect to CSI, the present application can also be used for the reporting of other auxiliary information, such as reporting relating to higher layer channel quality, RSRP (i.e., Reference Signal Received Power), RSRQ (i.e., Reference Signal Received Quality) and other information, positional auxiliary information reporting and so on. In addition, the channel reconstruction schemes in the present application utilizing new technologies such as artificial intelligence (AI) are also applicable to conventional schemes based on linear channel reconstruction. Further, the use of a unified UE reporting scheme can reduce implementation complexity or improve performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

The interpretation of terminology in the present application can refer to the descriptions in TS37 series and TS38 series of the 3rd Generation Partner Project (3GPP) protocols, if necessary.

The present application provides a method in a first node for wireless communications, comprising:
receiving a first radio signal and a first message, where the first message comprises Q configuration parameter groups, Q being a positive integer greater than 1; and generating at least target parameter group of a first type; and
transmitting a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
herein, the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, the second message assists the receiver in determining the Q1 configuration parameter(s), and thus the information related to the reports corresponding to the Q1 configuration parameter(s), improving the transmission efficiency of the reports.

In one embodiment, the order in which the concepts in the above method appear does not limit the order in which the corresponding steps are performed, for example, the reception of the first radio signal may precede or follow the reception of the first message, or the first radio signal may be received periodically; or, for example, the reception of the first radio signal may precede or follow the transmission of the second message.

Specifically, according to one aspect of the present application, the above method is characterized in that when all conditions in a first condition set are satisfied, the first report is updated; when any condition in the first condition set is not satisfied, the first node itself determines whether the first report is to be updated.

In one embodiment, the first condition set includes a first time being earlier than or no later than a first reference time.

In one subembodiment, the above method introduces a time domain condition to determine whether the first report needs to be updated, taking into account the processing capacity of the first node and being more compatible with non-linear processing.

In one embodiment, the first condition set includes a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

In one embodiment, the first condition set includes a first time being earlier than or no later than a first reference time, and includes a total number of processing units of a second type occupied by M report(s) not exceeding a first threshold and the first report being one of the M report(s); where the M report(s) is/are M highest-priority report(s) among all reports that occupy processing units of the second type from a same multicarrier symbol.

In one embodiment, the first time is a time for generating the at least target parameter group of the first type, and the first reference time is prior to and at an interval of a first time length from the time occupied by the first report.

In one embodiment, the first time is a time for generating a last generated parameter group of the first type of the at least target parameter group of the first type, and the first reference time is prior to and at an interval of a first time length from the time occupied by the first report.

In one embodiment, the second information is used to indicate the first time, and the first reference time is prior to and at an interval of a first time length from the time occupied by the first report.

In one embodiment, the first time is a time for generating the at least target parameter group of the first type, and the first reference time is the time occupied by the first radio signal.

In one embodiment, the first time is a time for generating a last generated parameter group of the first type of the Q1 parameter group(s) of the first type, and the first reference time is the time occupied by the first radio signal.

In one embodiment, the second information is used to indicate the first time, and the first reference time is the time occupied by the first radio signal.

Multiple embodiments presented above with respect to the first time and the first reference time allow the first node to not update the first report if, for example, it cannot process the first radio signal in a timely manner, which helps the first node.to arrange arithmetic processing units more flexibly.

Specifically, according to one aspect of the present application, the above method is characterized in that a time for generating the target parameter group of the first type is related to Q1, or, a number of processing units of a first type occupied by the target parameter group of the first type is related to the Q1.

The above method allows the first node to provide, via the second message, at least partial reference information about the time for generating the target parameter group of the first type; compared to the existing strict definition of time occupied by CPU (i.e., CSI processing unit), the above method provides the first node with more degree of freedom in the assignment of processing units and is more adaptable to non-linear processing and at the same time compatible with linear processing.

Specifically, according to one aspect of the present application, the above method is characterized in that a time for generating the target parameter group of the first type is related to a priority of the target parameter group of the first type, or, a number of processing units of a first type occupied by the target parameter group of the first type is related to the priority of the target parameter group of the first type.

Specifically, according to one aspect of the present application, the above method is characterized in that calculation of one parameter group of the first type occupies at least one processing unit of a first type; the Q1 is greater than 0 and a number of processing units of the first type being occupied used to calculate the Q1 parameter group(s) of the first type is unrelated to the Q1.

The above method is more adapted to searching for the optimal group of parameters using the training data set, giving full play to the processing capacity of the first node, while being compatible with conventional linear processing.

Specifically, according to one aspect of the present application, the above method is characterized in that Q1 is greater than 1, and a priority of the target parameter group of the first type is used to determine a number of processing units of a first type occupied by the target parameter group of the first type.

The above method ensures the processing delay for reports corresponding to a parameter group of the first type that has higher priority.

The present application provides a method in a second node for wireless communications, comprising:
transmitting a first radio signal and a first message, where the first message comprises Q configuration parameter groups, Q being a positive integer greater than 1; and
receiving a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
herein, the Q1 configuration parameter group(s) and Q1 parameter group(s) of a first type are in one-to-one correspondence, and a target parameter group of a first type is one parameter group of a first type being generated among the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

Specifically, according to one aspect of the present application, the above method is characterized in that when all conditions in a first condition set are satisfied, the first report is updated; when any condition in the first condition set is not satisfied, a transmitter of the second message itself determines whether the first report is to be updated; the first condition set comprises at least one of the following two conditions:
a first time being earlier than or no later than a first reference time, where the first time is a time for generating the at least target parameter group of the first type or is indicated by the second message, and the first reference time is related to the time being occupied by the first radio signal or the time being occupied by the first report;
a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

The present application provides a first node for wireless communications, comprising:
a first receiver, receiving a first radio signal and a first message, where the first message comprises Q configuration parameter groups, Q being a positive integer greater than 1; and generating at least target parameter group of a first type; and
a first transmitter, transmitting a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
herein, the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

The present application provides a second node for wireless communications, comprising:
a second transmitter, transmitting a first radio signal and a first message, where the first message comprises Q configuration parameter groups, Q being a positive integer greater than 1; and
a second receiver, receiving a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
herein, the Q1 configuration parameter group(s) and Q1 parameter group(s) of a first type are in one-to-one correspondence, and a target parameter group of a first type is one parameter group of a first type being generated among the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

### BRIEF DESCRIPTION OF THE DRAWINGS

Other features, objects and advantages of the present invention will become more apparent from the detailed description of non-restrictive embodiments taken in conjunction with the following drawings:
FIG. 1 illustrates a flowchart of communication of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of hardcore modules in a communication node according to one embodiment of the present application.
FIG. 5 illustrates a flowchart of transmission between a first node and a second node according to one embodiment of the present application.
FIG. 6 illustrates a schematic diagram of an AI processing system according to one embodiment of the present application.
FIG. 7 illustrates a schematic diagram of a first original CSI, a first CSI and a first recovered CSI according to one embodiment of the present application.
FIG. 8 illustrates a schematic diagram of a first encoder according to one embodiment of the present application.
FIG. 9 illustrates a schematic diagram of a first function according to one embodiment of the present application.
FIG. 10 illustrates a schematic diagram of a decoding layer group according to one embodiment of the present application.
FIG. 11 illustrates a schematic diagram of first reference time according to one embodiment of the present application.
FIG. 12 illustrates a structure block diagram of a processing device used in a first node according to one embodiment of the present application.
FIG. 13 illustrates a structure block diagram of a processing device used in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

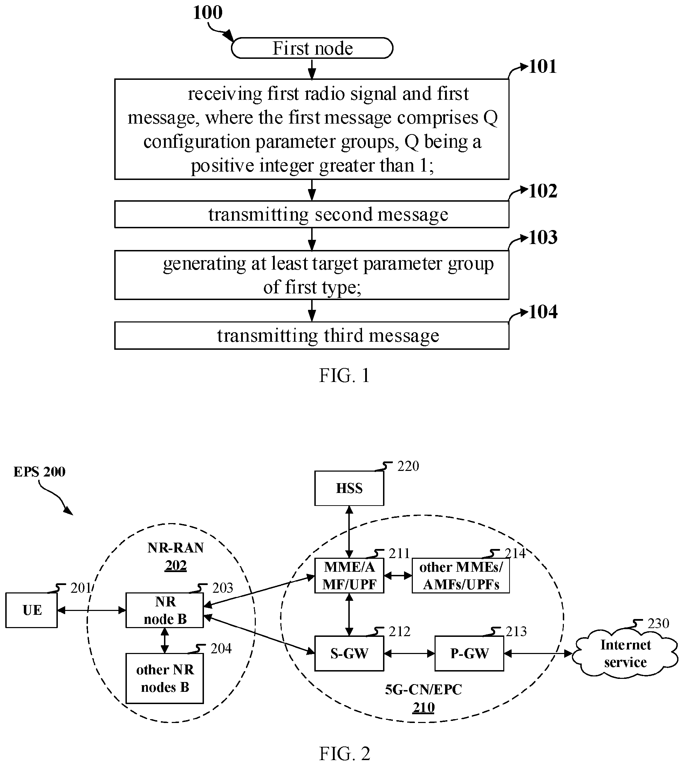

Embodiment 1 illustrates a flowchart of communication of a first node according to one embodiment of the present application, as shown in FIG. 1.

The first node 100 receives a first radio signal and a first message in step 101, where the first message comprises Q configuration parameter groups, Q being a positive integer greater than 1; and transmits a second message in step 102, where the second message is used to determine Q1 configuration parameter group(s), and the Q1 configuration parameter group(s) is/are a subset of the Q configuration parameter groups; and generates at least target parameter group of a first type in step 103; and transmits a third message in step 104, the third message comprising a first report.

In Embodiment 1, Q1 is a positive integer no greater than Q; the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, the first node is a UE (i.e., User Equipment), the first radio signal comprises a downlink reference signal, and the first message comprises a higher layer signaling.

In one subembodiment, the second message comprises a physical layer signaling, and the third message comprises a physical layer signaling.

In one subembodiment, the second message comprises a MAC CE, and the third message comprises a MAC CE.

In one subembodiment, the second message comprises an RRC layer reporting message, and the third message comprises an RRC layer reporting message.

In one subembodiment, the second message comprises an RRC layer reporting message, and the third message comprises a physical layer signaling.

In one embodiment, the downlink reference signal comprises a Channel state information reference signal (CSI-RS).

In one embodiment, the downlink reference signal comprises a CSI-RS or a Synchronization Signal /Physical Broadcast CHannel block (SSB).

In one embodiment, the downlink reference signal comprises a Positioning Reference Signal (PRS).

In one embodiment, the higher layer signaling includes a Radio Resource Control (RRC) signaling.

In one embodiment, the higher layer signaling comprises a Medium Access Control layer Control Element (MAC CE).

In one embodiment, the RRC signaling comprises Q RRC IE groups, the Q RRC IE groups respectively indicating the Q configuration parameter groups, any of the Q RRC IE groups comprising at least one RRC IE (i.e., Information Element).

In one embodiment, the Q configuration parameter groups are respectively used to configure Q reports, the first report being one of the Q reports.

In one embodiment, a measured reference signal resource, a carrier to which the measured reference signal resource belongs, of any of the Q reports is indicated by a corresponding configuration parameter group.

In one embodiment, a report type of any of the Q reports is indicated by a corresponding configuration parameter group, the report type being periodic, or the report type being aperiodic, or the report type being Semi Persistent.

In one embodiment, a reported content of any of the Q reports is indicated by a corresponding configuration parameter group.

In one embodiment, candidates for the reported content include CSI, location-related information, and beam management related information.

In one embodiment, candidates for the reported content includes channel impulse response related information.

In one embodiment, candidates for the reported content include at least one of cri-RI-PMI-CQI, cri-RI-il, cri-RI-il-CQI, cri-RI-CQI, cri-RSRP, cri-SINR, ssb-Index-RSRP, ssb-Index-SINR, cri-RI-LI-PMI-CQI, cri-SINR-r16 and ssb-Index-SINR-r16.

In one embodiment, the reported content is used to determine whether the calculation or generation of a report to which the reported content belongs is based on a parameter group of the first type.

In one embodiment, the calculation or generation based on a parameter group of the first type is non-linear.

In one embodiment, a parameter group of the first type is a Trained model obtained based on artificial intelligence.

In one embodiment, a parameter group of the first type is a trained model obtained based on machine learning.

In one embodiment, a name of one of the at least one RRC IE includes MeasObject.

In one embodiment, the at least one RRC IE comprises a MeasObjectToAddMod IE.

In one subembodiment, the first message comprises a MeasObjectToAddModList IE.

In one subembodiment, each of the Q reports comprises one RRC IE, a name of the one RRC IE including Measresult.

In one embodiment, the one RRC IE is a MeasResultNR IE.

In one embodiment, the one RRC IE is a MeasResultServMO IE.

In one embodiment, the at least one RRC IE comprises a MeasObjectNR IE, or comprises a MeasObjectEUTRA IE.

In one embodiment, a name of one of the at least one RRC IE includes *CSI Report.*

In one embodiment, the at least one RRC IE comprises a *CSI-ReportConfig* IE.

In one subembodiment, the first message comprises a csi-ReportConfigToAddModList IE.

In one subembodiment, each of the Q reports comprises a CSI.

In one embodiment, a name of one of the at least one RRC IE includes MeasElement.

In one embodiment, the configuration parameter group comprises a Non-Access-Stratum (NAS) message.

In one subembodiment, the second message and the third message are both NAS messages.

In one embodiment, the configuration parameter group comprises a GNSS-SgnMeasElement message, or comprises an MBS-BeaconMeasElement message, or comprises an NR-DL-TDOA-MeasElement message.

In one subembodiment, each of the Q reports comprises location related information.

In one embodiment, a name of the location related information includes providelocationinformation.

In one embodiment, the location related information comprises at least one of OTDOA-ProvideLocationInformation, A-GNSS-ProvideLocationInformation, ECID-ProvideLocationInformation, or TB S-ProvideLocationInformation.

In one embodiment, the first node is a network device and the first radio signal comprises an uplink reference signal.

In one subembodiment, the first message comprises a higher layer signaling.

In one embodiment, the second message indicates the Q1 configuration parameter group(s) from the Q configuration parameter groups.

In one embodiment, the second message includes index(es) or IDentifier(s) of the Q1 configuration parameter group(s).

In one embodiment, the second message comprises a bitmap.

In one embodiment, the bitmap comprises Q bits, the Q bits respectively corresponding to the Q configuration parameter groups, with Q1 bit(s) of the Q bits being in a first state, and bit(s) in the Q bits other than the Q1 bit(s) being in a second state; the Q1 configuration parameter group(s) being configuration parameter group(s) corresponding to the Q1 bit(s).

In one embodiment, the first state is 1 and the second state is 0.

In one embodiment, the first state is 0 and the second state is 1.

In one embodiment, entry positions of the Q configuration parameter groups in the first message respectively correspond to positions of the Q bits in the bitmap.

In one embodiment, the Q1 is 1 and the Q1 parameter group(s) of the first type includes only the target parameter group of the first type.

In one embodiment, the second information is used to indicate the execution of a first operation for reports configured by the Q1 configuration parameter group(s).

In one embodiment, the second information is used to indicate a first time window, within which a first operation is executed for reports configured by the Q1 configuration parameter group(s).

In one embodiment, a start of the first time window is the time occupied by the second information.

In one embodiment, the time occupied by the second information is a slot occupied by a physical layer channel transmitting the second information.

In one embodiment, the physical layer channel is a Physical Uplink Shared Channel (PUSCH).

In one embodiment, the second information is used to indicate a first time, and a first operation is executed for reports configured by the Q1 configuration parameter group(s) till the first time.

In one embodiment, the second information is used to indicate, before the Q1 parameter group(s) of the first type is/are recalculated, the execution of a first operation for reports configured by the Q1 configuration parameter group(s).

In one embodiment, the first operation comprises canceling of reports.

In one embodiment, the first operation comprises not updating reports.

In one embodiment, the first operation comprises the first node determining for itself whether or not to update reports.

In one embodiment, the third message is transmitted on a PUSCH.

In one embodiment, the third message is transmitted on a Physical Uplink Control Channel (PUCCH).

In one embodiment, the Q is less than 100.

In one embodiment, the Q does not exceed 96.

In one embodiment, the phrase generating at least target parameter group of a first type is to recalculate or update the at least target parameter group of the first type.

In one embodiment, the phrase generating at least target parameter group of a first type includes that utilizing the training data is to recalculate or update the at least target parameter group of the first type.

In one embodiment, the step S102 comprises: determining that the Q1 parameter group(s) of the first type needs/need to be updated, and as a response to the act of determining that the Q1 parameter group(s) of the first type needs/need to be updated, transmitting the second message.

In one embodiment, the step 5102 comprises: utilizing the training data is to recalculate or update the Q1 parameter group(s) of the first type.

In one embodiment, the at least target parameter group of the first type is/are the Q1 parameter group(s) of the first type.

In one embodiment, the target parameter group of the first type describes a trained model, and measurements of the first radio signal are used as inputs to the trained model and the output obtained is indicated by the first report.

In one embodiment, the first report is obtained by the output obtained being through coding, puncturing, scrambling and the like.

In one embodiment, a multicarrier symbol is a Single Carrier-Frequency Division Multiple Access (SC-FDMA) symbol.

In one embodiment, a multicarrier symbol is a Discrete Fourier Transform Spread OFDM (DFT-S-OFDM) symbol.

In one embodiment, a multicarrier symbol is a Filter Bank Multi Carrier (FBMC) symbol.

In one embodiment, a multicarrier symbol comprises a Cyclic Prefix (CP).

### Embodiment 2

Embodiment 2 illustrates a schematic diagram of a network architecture according to one embodiment of the present application, as shown in FIG. 2. FIG. 2 illustrates an architecture of 5G New Radio (NR), Long-Term Evolution (LTE) and Long-Term Evolution Advanced (LTE-A) systems. The 5G NR or LTE network architecture 200 may be called a 5G System/ Evolved Packet System (5GS/EPS) or other suitable terminology. The EPS 200 may comprise one UE 201, an NG-RAN 202, an Evolved Packet Core/5G-Core Network (EPC-5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field(AMF)/User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application, and the gNB203 corresponds to the second node in the present application.

In one embodiment, the UE201 supports the generation of reports taking advantage of Artificial Intelligence (AI) or Machine Learning.

In one embodiment, the UE201 supports the generation of a trained model using the training data or the generation of some of parameters in the trained model using the trained data.

In one embodiment, the UE201 supports the determination of at least part of parameters of Conventional Neural Networks (CNN) for CSI reconstruction through training.

In one embodiment, the UE 201 is a terminal supporting Massive-MIMO.

In one embodiment, the gNB203 supports Massive-MIMO-based transmission.

In one embodiment, the gNB203 supports the decompression of CSI taking advantage of AI or Deep Learning.

In one embodiment, the gNB 203 is a MacroCellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application are respectively the UE201 and the gNB203.

### Embodiment 3

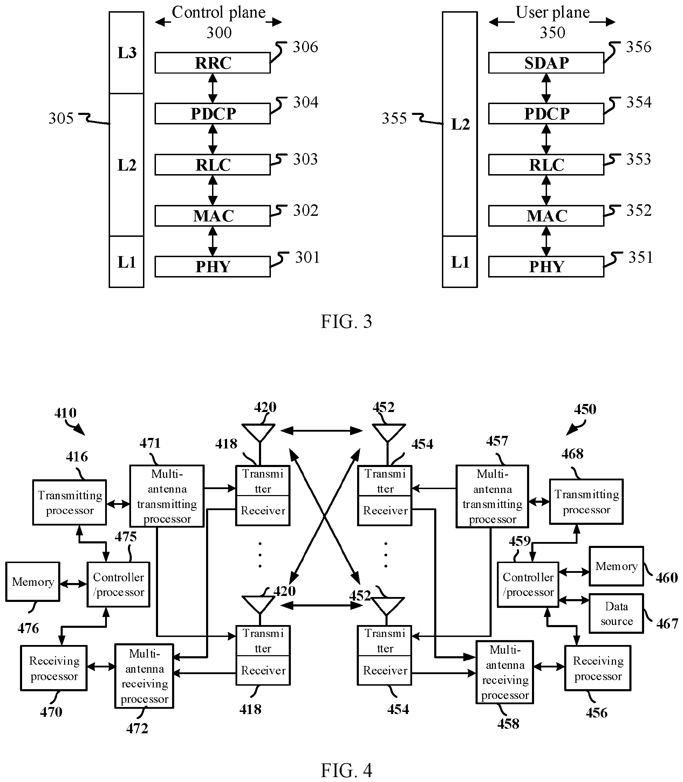

Embodiment 3 illustrates a schematic diagram of an embodiment of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first node (UE, or RSU in V2X, vehicle-mounted equipment or vehicle-mounted communication module) and a second node (gNB, UE, or RSU in V2X, vehicle-mounted equipment or vehicle-mounted communication module), or between two UEs is represented by three layers, which are: layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first node and a second node as well as between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second nodes. The PDCP sublayer 304 provides data encryption and integrity protection, and the PDCP sublayer 304 also provides support for inter-cell mobility of the second node between first nodes. The RLC sublayer 303 provides packet segmentation and reassembly, retransmission of a lost packet via ARQ, and it also provides duplicate packet detection and protocol error detection. The MAC sublayer 302 provides mapping between the logical and transport channels and multiplexing of logical channels. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several upper layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first radio signal in the present application is generated by the PHY 301.

In one embodiment, the Q configuration parameter groups in the present application are generated by the RRC sublayer 306.

In one embodiment, the measurement of the first radio signal in the present application is performed at the PHY 301.

### Embodiment 4

Embodiment 4 illustrates a schematic diagram of hardcore modules in a communication node according to one embodiment of the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs channel coding and interleaving so as to ensure a Forward Error Correction (FEC) at the second communication device 410 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 de-interleaves and channel decodes the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device (node) 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs channel coding, interleaving and modulation and mapping, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least receives a first radio signal and a first message, where the first message comprises Q configuration parameter groups, Q being a positive integer greater than 1; and generates at least target parameter group of a first type; and transmits a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report; herein, the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, the first communication device 450 comprises a memory that stores a computer readable instruction program. The computer readable instruction program generates actions when executed by at least one processor. The actions include: receiving a first radio signal and a first message, where the first message comprises Q configuration parameter groups, Q being a positive integer greater than 1; and generating at least target parameter group of a first type; and transmitting a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report; herein, the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, the second communication device 410 comprises at least one processor and at least one memory. The at least one memory comprises computer program codes; the at least one memory and the computer program codes are configured to be used in collaboration with the at least one processor. The second communication device 410 at least transmits a first radio signal and a first message, where the first message comprises Q configuration parameter groups, Q being a positive integer greater than 1; and receives a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report; herein, the Q1 configuration parameter group(s) and Q1 parameter group(s) of a first type are in one-to-one correspondence, and a target parameter group of a first type is one parameter group of a first type being generated among the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, the second communication device 410 comprises a memory that stores a computer readable instruction program. The computer readable instruction program generates actions when executed by at least one processor. The actions include: transmitting a first radio signal and a first message, where the first message comprises Q configuration parameter groups, Q being a positive integer greater than 1; and receiving a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report; herein, the Q1 configuration parameter group(s) and Q1 parameter group(s) of a first type are in one-to-one correspondence, and a target parameter group of a first type is one parameter group of a first type being generated among the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, the first communication device 450 corresponds to the first node in the present application.

In one embodiment, the second communication device 410 corresponds to the second node in the present application.

In one embodiment, the first communication device 450 is a UE, and the second communication device 410 is a base station.

In one embodiment, the antenna 452, the receiver 454, the multi-antenna receiving processor 458 and the receiving processor 456 are used for receiving a first radio signal and a first message.

In one embodiment, the controller/processor 459 is used for receiving the first message.

In one embodiment, the controller/processor 459 is used for generating at least target parameter group of a first type.

In one embodiment, the antenna 452, the transmitter 454, the multi-antenna transmitting processor 457, the transmitting processor 468, and the controller/processor 459 are used for transmitting a second message and a third message.

In one embodiment, the antenna 420, the transmitter 418, the multi-antenna transmitting processor 471 and the transmitting processor 416 are used for transmitting the first radio signal and the first message.

In one embodiment, the controller/processor 475 is used for transmitting the first message.

In one embodiment, the antenna 420, the receiver 418, the multi-antenna receiving processor 472, the receiving processor 470, and the controller/processor 475 are used for receiving a second message and a third message.

### Embodiment 5

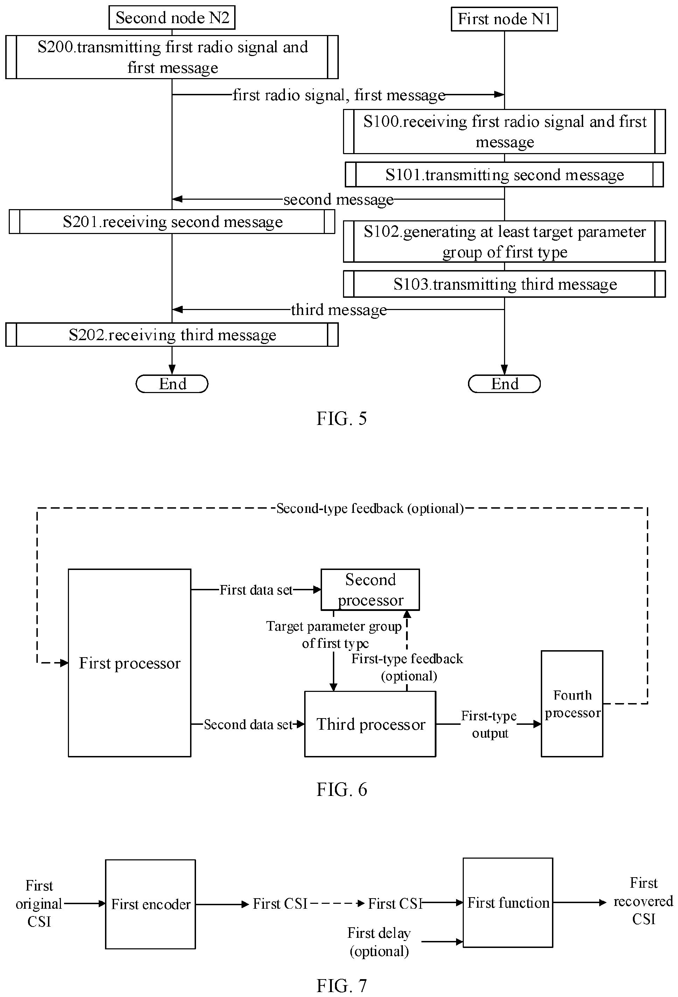

Embodiment 5 illustrates a flowchart of transmission between a first node and a second node according to one embodiment of the present application, as shown in FIG. 5.

The first node N1 receives a first radio signal and a first message in step S100, where the first message comprises Q configuration parameter groups, Q being a positive integer greater than 1; and transmits a second message in step S101, where the second message is used to determine Q1 configuration parameter group(s), and the Q1 configuration parameter group(s) is/are a subset of the Q configuration parameter groups, Q1 being a positive integer no greater than Q; and generates at least target parameter group of a first type in step S102; and transmits a third message in step S103, the third message comprising a first report;
the second node N2 transmits the first radio signal and the first message in step S200; receives the second message in step S201; and receives the third message in step S202.

In Embodiment 5, the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, any parameter group of a first type of the at least target parameter group of the first type is one of the Q1 parameter group(s) of the first type.

In one embodiment, the target parameter group of the first type is any one of the Q1 parameter group(s) of the first type.

In one embodiment, the at least target parameter group of the first type is/are the Q1 parameter group(s) of the first type.

In one embodiment, the at least target parameter group of the first type includes all parameter group(s) of the first type out of the Q1 parameter group(s) of the first type that is/are recalculated after transmitting the second message.

In one embodiment, the at least target parameter group of the first type includes all parameter group(s) of the first type out of the Q1 parameter group(s) of the first type that is/are recalculated after transmitting the second message and before transmitting the third message.

In one embodiment, the first node N1 in the step S101 monitors whether the Q parameter groups of the first type need to be updated and determines that the Q1 parameter group(s) of the first type needs/need to be updated.

In one embodiment, as a response to determining that the Q1 parameter group(s) of the first type needs/need to be updated, the first node N1 transmits the second message in step S102.

In one embodiment, when all conditions in a first condition set are satisfied, the first report is updated; when any condition in the first condition set is not satisfied, the first node itself determines whether the first report is to be updated.

In one embodiment, the phrase the first node itself determines whether the first report is to be updated means that the first node N1 is not required to update the first report.

In one embodiment, the phrase the first node itself determines whether the first report is to be updated means that the first node N1 determines whether to update the first report based on its own occupancy of processing units.

In one embodiment, the phrase the first node itself determines whether the first report is to be updated means that whether the first report is updated or not is not to be standardized and is to be determined by each vendor.

In one subembodiment of the above embodiment, several of the above embodiments allow that the first report sent may not be updated, ensuring that the first node N1 is still able to carry out the configuration indications of the second node N2 in scenarios where there is a lack of processing power.

In one embodiment, the first condition set includes a first time being earlier than or no later than a first reference time.

In one embodiment, the first time is a time for generating the at least target parameter group of the first type.

In one embodiment, the first time is a time for generating a last generated parameter group of a first type of the at least target parameter group of the first type.

In one embodiment, the second information is used to indicate the first time.

In one embodiment, the first reference time is prior to and at an interval of a first time length from the time occupied by the first report.

In one embodiment, the first time length is known to both the first node N1 and the second node N2.

In one embodiment, the first report is aperiodic and the first time length is a time interval between a Physical Downlink Control Channel (PDCCH) used to trigger the first report and the first report, i.e., the first reference time is a first multicarrier symbol following the PDCCH used to trigger the first report.

In one embodiment, the first time length comprises at least one multicarrier symbol.

In one embodiment, the first time length is configurable.

In one embodiment, the first time length is indicated by the second node N2 transmitting a higher layer signaling.

In one embodiment, the first time length is related to the capability of the first node N1.

In one embodiment, the first time length is indicated by the first node N1 via RRC information.

In one embodiment, the RRC information comprises a *UECapabilityInformation* IE.

In one embodiment, the first time is a time for generating the at least target parameter group of the first type.

In one embodiment, the second message is used to indicate the first time.

In one embodiment, the first report is periodic or semi-persistent, and the first radio signal comprises at least one downlink reference signal resource, the first reference time being the earliest of all multicarrier symbols occupied by the at least one downlink reference signal resource in its/their respective latest occasion(s), the latest occasion being no later than a first slot, the first slot being related to a slot occupied by the first report.

In one embodiment, the first slot is a slot occupied by a PUSCH carrying the first report.

In one embodiment, the first slot is the k-th slot prior to a slot occupied by a PUSCH carrying the first report, the k being a positive integer.

In one embodiment, the k is no less than 4.

In one embodiment, the k is 4 or 5.

In one embodiment, the k is related to a number of downlink reference resource(s) included in the at least one downlink reference signal resource.

In one embodiment, the first report includes a CSI and the first slot is a CSI reference resource of the first report.

In one embodiment, the first condition set includes a total number of processing units of a second type occupied by M report(s) not exceeding a first threshold and the first report being one of the M report(s), where the M report(s) is/are M highest-priority report(s) among all reports that occupy processing units of the second type from a same multi-carrier symbol.

In one embodiment, the first threshold is the number of processing unit(s) of the second type that is/are not occupied in the same multi-carrier symbol.

In one embodiment, the first threshold is the difference obtained by subtracting P1 from P, the P being related to the capacity of the first node N1, the P1 being a number of processing units of the second type occupied in the same multi-carrier symbol; the number of the processing units of the second type occupied is not counted for the processing units of the second type occupied by a report starting from the same multicarrier symbol.

In one embodiment, the first node N1 transmits an RRC message indicating the P.

In one embodiment, a configuration parameter group for configuring a report is used to determine the priority of this report.

In one embodiment, a configuration parameter group for configuring a report implicitly indicates the priority of this report.

In one embodiment, a priority of a report is an integer, and the greater the value of the priority of a report, the lower the priority of this report.

In one embodiment, the value of a priority of a report is dependent on a report type of the report.

In one embodiment, a report type of the report is periodic, semi-persistent, or aperiodic, and the value of the priority of the report is in descending order.

In one embodiment, a priority of a report is dependent on an index of a serving cell to which a downlink RS resource measured by the report belongs.

In one embodiment, the smaller an index of a serving cell to which a downlink RS resource measured by a report belongs, the smaller the value of the priority of the report.

In one embodiment, a value of a priority of a report is linearly related to an index with which this report is configured.

In one embodiment, a time for generating the target parameter group of the first type is related to the Q1.

In one embodiment, the greater the Q1 is, the later the time for generating (the time for recalculating or updating) the target parameter group of the first type is.

In one embodiment, the smaller the Q1 is, at least not the later the time for generating (the time for recalculating or updating) the target parameter group of the first type is.

In one embodiment, a time for generating the target parameter group of the first type is related to Q1, or, a number of processing units of a first type occupied by the target parameter group of the first type is related to the Q1.

In one embodiment, the greater the Q1 is, the larger the number of processing units of the first type used to recalculate or update the target parameter group of the first type is.

In one embodiment, the greater the Q1 is, at least not the smaller the number of processing units of the first type used to recalculate or update the target parameter group of the first type is.

In one embodiment, the time for generating the target parameter group of the first type is related to the priority of the target parameter group of the first type.

In one embodiment, the higher the priority of the target parameter group of the first type among the priorities of the Q1 parameter group(s) of the first type, the earlier the time for generating the target parameter group of the first type.

In one embodiment, the priority of a parameter group of the first type is the priority of a report generated using the parameter group of the first type.

In one embodiment, the priority of a parameter group of the first type is the highest priority among the priorities of multiple reports generated using the parameter group of the first type.

In one embodiment, a number of processing units of a first type occupied by the target parameter group of the first type is related to the priority of the target parameter group of the first type.

In one embodiment, the higher the priority of the target parameter group of the first type among the priorities of the Q1 parameter group(s) of the first type, the greater the number of processing units of a first type occupied by the target parameter group of the first type.

In one embodiment, the higher the priority of the target parameter group of the first type among the priorities of the Q1 parameter group(s) of the first type, at least not the smaller the number of processing units of a first type occupied by the target parameter group of the first type.

In one embodiment, calculation of one parameter group of the first type occupies at least one processing unit of a first type; the Q1 is greater than 0 and a number of processing units of the first type being occupied used to calculate the Q1 parameter group(s) of the first type is unrelated to the Q1.

In one subembodiment, a number of processing unit(s) of the first type occupied for calculating the Q1 parameter group(s) of the first type is G, the G being a positive integer.

In one embodiment, the G is related to the capacity of the first node N1.

In one embodiment, the G is indicated by the first node N1 via an RRC message.

In one embodiment, the RRC message is a *UECapabilityInformation* IE.

The above method has the advantage of being able to utilize as many processing units of the first type as possible to compute the Q1 parameter group(s) of the first type.

In one embodiment, Q1 is greater than 1, and a priority of the target parameter group of the first type is used to determine a number of processing units of a first type occupied by the target parameter group of the first type.

### Embodiment 6

Embodiment 6 illustrates a schematic diagram of an AI processing system according to one embodiment of the present application, as shown in FIG. 6. FIG. 6 comprises a first processor, a second processor, a third processor and a fourth processor.

In Embodiment 6, the first processor transmits a first data set to the second processor, and the second processor generates a target parameter group of a first type according to the first data set, and then the second processor transmits the generated target parameter group of the first type to the third processor, and the third processor utilizes the target parameter group of the first type to process the second data set for obtaining a first-type output, and transmits the first-type output to the fourth processor.

While only the target parameter group of the first type is presented as an example for explanation, the following embodiments are also applicable to any one of the Q parameter groups of the first type.

In one embodiment, the third processor transmits first-type feedback to the second processor, the first-type feedback being used to trigger re-computing or updating the target parameter group of the first type.

In one embodiment, the fourth processor transmits second-type feedback to the first processor, the second-type feedback being used to generate the first data set or the second data set, or the second-type feedback being used to trigger a transmission of the first data set or the second data set.

In one embodiment, the first processor generates the first data set and the second data set according to a measurement of the first radio signal.

In one embodiment, the first processor and the second processor belong to a first node, while the fourth processor belongs to a second node, where the second processor comprises at least one processing unit of a first type.

In one embodiment, the third processor belongs to a first node, and the third processor comprises at least one processing unit of a second type, the first-type output including a first report.

In one embodiment, the first data set is Training Data, the second processor being used for training a model, the model trained being described by the target parameter group of the first type.

In one embodiment, the third processor constructs a model according to the target parameter group of the first type, and then inputs the second data set to the model constructed to obtain the first-type output, and transmits the first-type output to the fourth processor.

In one embodiment, the third processor computes an error between the first-type output and actual data for determining the performance of the trained model; the actual data is data delivered from the first processor that is received after the second data set.

The above embodiment particularly applies to forecasting-related reporting.

In one embodiment, the third processor recovers a reference data set according to the first-type output, where an error between the reference data set and the second data set is used for generating the first-type feedback.

The recovery of the reference data set usually uses the inverse operation similar to the target parameter group of the first type, and the embodiment above particularly applies to CSI Compression-related reporting.

In one embodiment, the first-type feedback is used for reflecting the performance of the trained model; when the performance of the trained model cannot meet requirements, the second processor will re-compute the target parameter group of the first type.

Typically, when the error is too large or there's been no update for too long, the performance of the trained model is assumed to be unsatisfactory.

In one embodiment, the third processor belongs to a second node, and the first report comprises the target parameter group of a first type, or the first report indicates a parameter group corresponding to the inverse operation of the target parameter group of the first type.

In one embodiment, the capacity of the first node supports G processing units of a first type in parallel, the G being a positive integer greater than 1; the second processor occupies G1 processing unit(s) of the first type, the G1 being a positive integer not greater than the G.

In one embodiment, in order to generate the Q1 parameter group(s) of the first type, the G processing units of the first type are assigned as follows:
Step I. If the number of unassigned processing unit(s) of the first type among the G processing units of the first type is not less than the Q1, assigning each of Q1 processing unit(s) of a first type for generating the Q1 parameter group(s) of the first type; if the number of unassigned processing unit(s) of the first type among the G processing units of the first type is less than the Q1, assigning the unassigned processing unit(s) of the first type for calculating the first Q2 parameter group(s) of the first type sorted in descending order of priority among the Q1 parameter group(s) of the first type, the Q2 being the number of processing unit(s) of the first type included in the unassigned processing unit(s) of the first type.
Step II. Continuously performing the Step I until the assignment is complete.

In one embodiment, in order to generate the Q1 parameter group(s) of the first type, the G processing units of a first type are assigned as follows:
Step I. For the remaining parameter group(s) of the first type of the Q1 parameter group(s) of the first type not having been computed, all of the G processing units of the first type are assigned to compute a highest-priority parameter group of the first type thereof until either the highest-priority parameter group of the first type is computed or the first timer expires;
Step II. Restarting the first timer and iteratively performing the Step I until all of the Q1 parameter group(s) of the first type have been processed.

In one embodiment, an expiration time of the first timer is configurable.

In one embodiment, an expiration time of the first timer is related to the capability of the first node.

In one embodiment, the expiration time of the first timer is indicated by the first node sending an RRC message.

In one embodiment, the third processor can occupy only one processing unit of a second type.

### Embodiment 7

Embodiment 7 illustrates a schematic diagram of a first original CSI, a first CSI and a first recovered CSI according to one embodiment of the present application, as shown in FIG. 7. In FIG. 7, the input of a first encoder comprises at least the first original CSI, the first original CSI being typically obtained by the first node going through at least channel estimation; the output of the first encoder comprises the first CSI; the first CSI is reported to a receiver via an air interface; the input of a first function comprises at least the first CSI, and the output of the first function comprises the first recovered CSI. The first encoder is a trained model, and for a given model structure, the first encoder is defined by a target parameter group of a first type.

In Embodiment 7, the first encoder is established at a first node, while the first function is established at a second node, or is established both at the first node and the second node. The first encoder is used to compress the first original CSI in order to reduce the air interface overhead of the first CSI, and the first function is used to decompress the first CSI in order to ensure, as far as possible, that the first recovered CSI accurately reflects the actual channel characteristics, and thus the first function may also be referred to as a decoder.

In one embodiment, the first configuration message comprises the first field and a first report comprises the first CSI.

In one embodiment, the first encoder belongs to a third processor in Embodiment 6, and the first function is a functionality implemented by a fourth processor in Embodiment 6.

In one embodiment, at least part of the parameters of the first function are obtained through training on the side of the first node or in a second processor in Embodiment 6 and are indicated to the second node via a first report by the first node.

In one embodiment, the first function is linear, e.g. Wiener filtering, two×one-dimensional filtering and the like.

In one embodiment, both the first encoder and the first function are non-linear.

In one embodiment, the first encoder and the first function are implemented based on a CRnet encoder and a CRnet decoder, respectively, as described in detail with reference to Zhilin Lu, Multi-resolution CSI Feedback with Deep Learning in Massive MIMO System, 2020 IEEE International Conference on Communications (ICC).

In one embodiment, (without taking into account a first delay) the optimization objective of the first function includes minimizing an error between the first recovered CSI and the first original CSI, such as Mean Square Error (MSE) and Linear Minimum Mean Square Error (LMMSE).

In scenarios where channel changes are slow, the above method can simplify the design of the first function and reduce complexity.

In one embodiment, the input of the first function comprises a first delay, the first delay being described with reference to Embodiment 9.

The introduction of a first delay has the advantage of making the first recovered CSI reflect the channel characteristics on time-frequency resource being scheduled more accurately, but at a cost that the design of the first function may get more complex (e.g. an additional module for CSI prediction may be required).

In one embodiment, the first original CSI comprises a frequency-domain channel impulse response.

In one embodiment, the first original CSI comprises a time-domain channel impulse response.

In one embodiment, the first original CSI comprises at least one of CSI reference signal received power (CSI-RSRP), CSI reference signal received Quality (CSI-RSRQ), CSI signal-to-noise and interference ratio (CSI-SINR), SS reference signal received power (SS-RSRP), SS reference signal received quality (SS-RSRQ), or SS signal-to-noise and interference ratio (SS-SINR).

In one embodiment, the first original CSI comprises at least one of a CSI-RS Resource Indicator (CRI), a Rank Indicator (RI), a Precoding Matrix Indicator (PMI) or a Channel quality indicator (CQI).

In one embodiment, the first original CSI comprises a channel impulse response or a received downlink reference signal.

An advantage of the several embodiments described above is that the first CSI is utilized to provide more accurate channel information than conventional CSI, such as RI, PMI, CQI, which in turn improves the transmission performance. In addition, the several embodiments described above can make full use of existing standards/hardware capabilities and have good compatibility.

### Embodiment 8

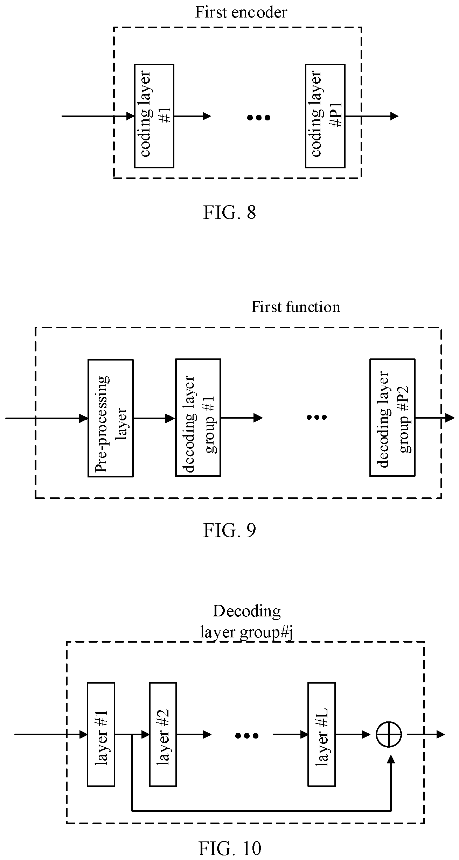

Embodiment 8 illustrates a schematic diagram of a first encoder according to one embodiment of the present application, as shown in FIG. 8. In FIG. 8, the first encoder comprises P1 coding layers, namely, coding layers #1, #2... and #P1.

In one embodiment, P1 is 2, namely, the P1 coding layers include a coding layer #1 and a coding layer #2, the coding layer #1 and the coding layer #2 respectively being a Convolution layer and a Fully Connected layer; at the Convolution layer, at least one convolutional kernel is used for convoluting a first original CSI for generating corresponding feature map(s), and at least one feature map output by the convolution layer is/are reshaped as a vector to be input to the fully connected layer; the fully connected layer converts the above vector into the first CSI. A more detailed description can be found in the technical literature related to CNNs, for example, Chao-Kai Wen, Deep Learning for Massive MIMO CSI Feedback, IEEE WIRELESS COMMUNICATIONS LETTERS, VOL. 7, NO. 5, OCTOBER 2018, etc.

In one embodiment, P1 is 3, namely, the P1 coding layers are respectively a Fully Connected layer, a Convolution layer and a Pooling layer.

### Embodiment 9

Embodiment 9 illustrates a schematic diagram of a first function according to one embodiment of the present application, as shown in FIG. 9. In FIG. 9, the first function comprises a pre-processing layer, as well as P2 decoding layer groups, i.e., decoding layer groups #1, #2..., #P2, where each decoding layer group comprises at least one decoding layer.

According to conventional CSI processing algorithms, the first CSI can be considered to be obtained by quantization of the sampling of the first original CSI in the time or frequency domain; accordingly, the first function is linear, e.g. in interpolating and filtering the first CSI in time or frequency domain to obtain the first recovered CSI.

In addition to the first function described above, which is linear, the following embodiments describe the implementation of a non-linear function.

In one embodiment, the pre-processing layer is a Fully Connected layer, which is to expand a size of the first CSI to a size of the first original CSI

In one embodiment, any two decoding layer groups among the P2 decoding layer groups have identical structures, where the structure comprises a number of decoding layers being comprised, as well as the size of an input parameter and the size of an output parameter of each decoding layer being comprised.

In one embodiment, a second node indicates the P2 and the structure of the decoding layer groups to a first node, and the first node indicates other parameters of the first function via the second signaling.

In one embodiment, the other parameters include at least one of a threshold of activation function, a size of convolutional kernel, a step-size of convolutional kernel, or a weight among feature maps.

### Embodiment 10

Embodiment 10 illustrates a schematic diagram of a decoding layer group according to one embodiment of the present application, as shown in FIG. 10. In FIG. 10, the decoding layer group #j consists of L layers, i.e., layer #1, layer #2..., and layer #L; the decoding layer group is any decoding layer group among the P2 decoding layer groups.

In one embodiment, L is 4; a first layer among the L layers is an input layer, while the last three of them are convolution layers; for more detailed descriptions, refer to technical literature of CNN, for instance, Chao-Kai Wen, Deep Learning for Massive MIMO CSI Feedback, IEEE WIRELESS COMMUNICATIONS LETTERS, VOL. 7, NO. 5, OCTOBER 2018, etc.

In one embodiment, the L layers include at least one convolution layer and a pooling layer.

### Embodiment 11

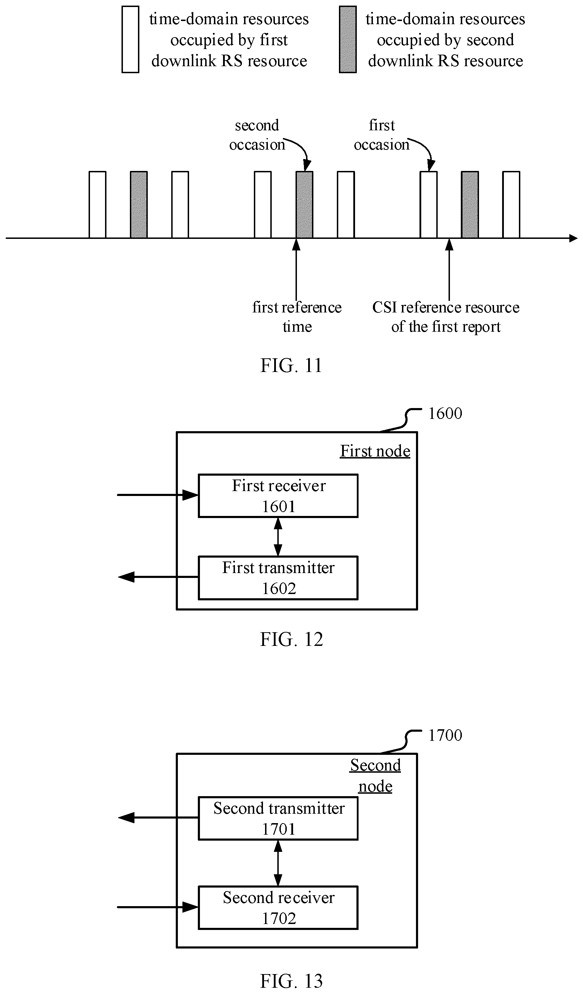

Embodiment 11 illustrates a schematic diagram of a first reference time according to one embodiment of the present application, as shown in FIG. 11. In FIG. 11, the unfilled small square refers to time-domain resources occupied by a first downlink Reference Signal (RS) resource, and the gray filled small square refers to time-domain resources occupied by a second downlink RS resource; the first report comprises a CSI.

In Embodiment 11, a first occasion is the most recent occasion for the first downlink RS resource prior to the CSI reference resource of the first report, and a second occasion is the most recent occasion for the second downlink RS resource prior to the CSI reference resource of the first report; the first reference time is the start time of a first multicarrier symbol occupied by the first downlink RS resource in the second occasion.

In Embodiment 11, when all conditions in a first condition set are satisfied, a first report is updated; when any condition in the first condition set is not satisfied, the first node itself determines whether the first report is to be updated; the first condition set includes a first time being earlier than or no later than the first reference time.

In one embodiment, the first time is a time for generating a last parameter group of a first type of the at least target parameter group of the first type.

In one embodiment, the first time is a time for generating the target parameter group of the first type.

In one embodiment, the second message indicates the first time.

In one embodiment, when the first time is not later than the first reference time, the first node is able to perform measurements using the target parameter group of the first type in the second occasion and the first occasion; when the first time is later than the first reference time, measurements of the first node are compromised and therefore are not required to update the first report.

In one embodiment, the first radio signal occupies at least the first downlink RS resource in the first occasion and the second downlink RS resource in the second occasion.

In one embodiment, the first radio signal occupies at least the first downlink RS resource and the second downlink RS resource after the first reference time and before the first report.

In one subembodiment, the first radio signal occupies the first downlink RS resource or the second downlink RS resource that overlaps in time with the first report.

### Embodiment 12

Embodiment 12 illustrates a structure block diagram of a processing device used in a first node according to one embodiment of the present application, as shown in FIG. 12. In FIG. 11, a processing device 1600 in a first node is comprised of a first receiver 1601 and a first transmitter 1602.

The first receiver 1601 receives a first radio signal and a first message, where the first message comprises Q configuration parameter groups, Q being a positive integer greater than 1; and generating at least target parameter group of a first type; and
the first transmitter 1602 transmits a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report.

In Embodiment 12, the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, when all conditions in a first condition set are satisfied, the first report is updated; when any condition in the first condition set is not satisfied, the first node itself determines whether the first report is to be updated; the first condition set comprises the following two conditions:
a first time being earlier than or no later than a first reference time, where the first time is a time for generating the at least target parameter group of the first type or is indicated by the second message, and the first reference time is related to the time being occupied by the first radio signal or the time being occupied by the first report;
a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

In one embodiment, a time for generating the target parameter group of the first type is related to Q1, or, a number of processing units of a first type occupied by the target parameter group of the first type is related to the Q1.

In one embodiment, a time for generating the target parameter group of the first type is related to a priority of the target parameter group of the first type, or, a number of processing units of a first type occupied by the target parameter group of the first type is related to the priority of the target parameter group of the first type.

In one embodiment, calculation of one parameter group of the first type occupies at least one processing unit of a first type; the Q1 is greater than 0 and a number of processing units of the first type being occupied used to calculate the Q1 parameter group(s) of the first type is unrelated to the Q1.

In one embodiment, Q1 is greater than 1, and a priority of the target parameter group of the first type is used to determine a number of processing units of a first type occupied by the target parameter group of the first type.

In one embodiment, the first node 1600 is a UE.

In one embodiment, the first transmitter 1602 comprises at least one of the antenna 452, the transmitter/receiver 454, the multi-antenna transmitting processor 457, the transmitting processor 468, the controller/processor 459, the memory 460 or the data source 467 in FIG. 4 of the present application.

In one embodiment, the first transmitter 1602 comprises the antenna 452, the transmitter/receiver 454, the multi-antenna transmitting processor 457, the transmitting processor 468, the controller/processor 459, the memory 460 and the data source 467 in FIG. 4 of the present application.

In one embodiment, the first receiver 1601 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first three of the antenna 452, the receiver 454, the multi-antenna receiving processor 458, the receiving processor 456, the controller/processor 459, the memory 460 and the data source 467 in FIG. 4 of the present application.

### Embodiment 13

Embodiment 13 illustrates a structure block diagram of a processing device used in a second node according to one embodiment of the present application, as shown in FIG. 13. In FIG. 13, a processing device 1700 in a second node is comprised of a second transmitter 1701 and a second receiver 1702.

The second transmitter 1701 transmits a first radio signal and a first message, where the first message comprises Q configuration parameter groups, Q being a positive integer greater than 1; and
the second receiver 1702 receives a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report.

In Embodiment 13, the Q1 configuration parameter group(s) and Q1 parameter group(s) of a first type are in one-to-one correspondence, and a target parameter group of a first type is one parameter group of a first type being generated among the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

In one embodiment, when all conditions in a first condition set are satisfied, the first report is updated; when any condition in the first condition set is not satisfied, a transmitter of the second message itself determines whether the first report is to be updated; the first condition set comprises the following two conditions:
a first time being earlier than or no later than a first reference time, where the first time is a time for generating the at least target parameter group of the first type or is indicated by the second message, and the first reference time is related to the time being occupied by the first radio signal or the time being occupied by the first report;
a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

In one embodiment, the second node 1700 is a base station.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second receiver 1702 comprises the antenna 420, the receiver 418, the multi-antenna receiving processor 472, the receiving processor 470, and the controller/processor 475.

In one embodiment, the second receiver 1702 comprises the controller/processor 475.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The UE and terminal in the present application include but are not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things (IOT), RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment

It will be appreciated by those skilled in the art that this application can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving a first radio signal and a first message, where the first message comprises Q configuration parameter groups, Q being a positive integer greater than 1; and generating at least target parameter group of a first type; and
a first transmitter, transmitting a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
wherein the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

2. The first node according to claim 1, **characterized in that** when all conditions in a first condition set are satisfied, the first report is updated; when any condition in the first condition set is not satisfied, the first node itself determines whether the first report is to be updated; the first condition set comprises at least one of the following two conditions:
a first time being earlier than or no later than a first reference time, where the first time is a time for generating the at least target parameter group of the first type or is indicated by the second message, and the first reference time is related to the time being occupied by the first radio signal or the time being occupied by the first report;
a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

3. The first node according to claim 1 or 2, **characterized in that** a time for generating the target parameter group of the first type is related to Q1, or, a number of processing units of a first type occupied by the target parameter group of the first type is related to the Q1.

4. The first node according to any of claims 1-3, **characterized in that** a time for generating the target parameter group of the first type is related to a priority of the target parameter group of the first type, or, a number of processing units of a first type occupied by the target parameter group of the first type is related to the priority of the target parameter group of the first type.

5. The first node according to any of claims 1-4, **characterized in that** calculation of one parameter group of the first type occupies at least one processing unit of a first type; the Q1 is greater than 0 and a number of processing units of the first type being occupied used to calculate the Q1 parameter group(s) of the first type is unrelated to the Q1.

6. The first node according to any of claims 1-5, **characterized in that** the Q1 is greater than 1, and a priority of the target parameter group of the first type is used to determine a number of processing units of a first type occupied by the target parameter group of the first type.

7. A second node for wireless communications, comprising:
a second transmitter, transmitting a first radio signal and a first message, where the first message comprises Q configuration parameter groups, Q being a positive integer greater than 1; and
a second receiver, receiving a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
wherein the Q1 configuration parameter group(s) and Q1 parameter group(s) of a first type are in one-to-one correspondence, and a target parameter group of a first type is one parameter group of a first type being generated among the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

8. The second node according to claim 7, **characterized in that** when all conditions in a first condition set are satisfied, the first report is updated; when any condition in the first condition set is not satisfied, a transmitter of the second message itself determines whether the first report is to be updated; the first condition set comprises at least one of the following two conditions:
a first time being earlier than or no later than a first reference time, where the first time is a time for generating the at least target parameter group of the first type or is indicated by the second message, and the first reference time is related to the time being occupied by the first radio signal or the time being occupied by the first report;
a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

9. The second node according to claim 7 or 8, **characterized in that** a time for generating the target parameter group of the first type is related to Q1, or, a number of processing units of a first type occupied by the target parameter group of the first type is related to the Q1.

10. The second node according to any of claims 7-9, **characterized in that** a time for generating the target parameter group of the first type is related to a priority of the target parameter group of the first type, or, a number of processing units of a first type occupied by the target parameter group of the first type is related to the priority of the target parameter group of the first type.

11. The second node according to any of claims 7-10, **characterized in that** calculation of one parameter group of the first type occupies at least one processing unit of a first type; the Q1 is greater than 0 and a number of processing units of the first type being occupied used to calculate the Q1 parameter group(s) of the first type is unrelated to the Q1.

12. The second node according to any of claims 7-11, **characterized in that** the Q1 is greater than 1, and a priority of the target parameter group of the first type is used to determine a number of processing units of a first type occupied by the target parameter group of the first type.

13. A method in a first node for wireless communications, comprising:
receiving a first radio signal and a first message, where the first message comprises Q configuration parameter groups, Q being a positive integer greater than 1; and generating at least target parameter group of a first type; and
transmitting a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
wherein the Q1 configuration parameter group(s) and Q1 parameter group(s) of a first type are in one-to-one correspondence, and the target parameter group of the first type is one of the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

14. The method in the first node according to claim 13, **characterized in that** when all conditions in a first condition set are satisfied, the first report is updated; when any condition in the first condition set is not satisfied, the first node itself determines whether the first report is to be updated; the first condition set comprises at least one of the following two conditions:
a first time being earlier than or no later than a first reference time, where the first time is a time for generating the at least target parameter group of the first type or is indicated by the second message, and the first reference time is related to the time being occupied by the first radio signal or the time being occupied by the first report;
a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

15. The method in the first node according to claim 13 or 14, **characterized in that** a time for generating the target parameter group of the first type is related to Q1, or, a number of processing units of a first type occupied by the target parameter group of the first type is related to the Q1.

16. The method in the first node according to any of claims 13-15, **characterized in that** a time for generating the target parameter group of the first type is related to a priority of the target parameter group of the first type, or, a number of processing units of a first type occupied by the target parameter group of the first type is related to the priority of the target parameter group of the first type.

17. The method in the first node according to any of claims 13-16, **characterized in that** calculation of one parameter group of the first type occupies at least one processing unit of a first type; the Q1 is greater than 0 and a number of processing units of the first type being occupied used to calculate the Q1 parameter group(s) of the first type is unrelated to the Q1.

18. The method in the first node according to any of claims 13-17, **characterized in that** the Q1 is greater than 1, and a priority of the target parameter group of the first type is used to determine a number of processing units of a first type occupied by the target parameter group of the first type.

19. A method in a second node for wireless communications, comprising:
transmitting a first radio signal and a first message, where the first message comprises Q configuration parameter groups, Q being a positive integer greater than 1; and
receiving a second message and a third message; where the second message is used to determine Q1 configuration parameter group(s), and the Q1 configuration parameter group(s) is/are a subset of the Q configuration parameter groups, Q1 being a positive integer no greater than Q, the third message comprising a first report;
wherein the Q1 configuration parameter group(s) and Q1 parameter group(s) of a first type are in one-to-one correspondence, and a target parameter group of a first type is one parameter group of a first type being generated among the Q1 parameter group(s) of the first type; a target configuration parameter group is used to configure the first report, and the target configuration parameter group is one of the Q1 configuration parameter group(s) that corresponds to the target parameter group of the first type; a measurement of the first radio signal and the target parameter group of the first type are used together to generate the first report.

20. The method in the second node according to claim 19, **characterized in that** when all conditions in a first condition set are satisfied, the first report is updated; when any condition in the first condition set is not satisfied, a transmitter of the second message itself determines whether the first report is to be updated; the first condition set comprises at least one of the following two conditions:
a first time being earlier than or no later than a first reference time, where the first time is a time for generating the at least target parameter group of the first type or is indicated by the second message, and the first reference time is related to the time being occupied by the first radio signal or the time being occupied by the first report;
a total number of processing units of a second type occupied by M report(s) not exceeding a first threshold and the first report being one of the M report(s), where the M report(s) is/are M highest-priority report(s) among all reports that occupy processing units of the second type from a same multicarrier symbol.

21. The method in the second node according to claim 19 or 20, **characterized in that** a time for generating the target parameter group of the first type is related to Q1, or, a number of processing units of a first type occupied by the target parameter group of the first type is related to the Q1.

22. The method in the second node according to any of claims 19-21, **characterized in that** a time for generating the target parameter group of the first type is related to a priority of the target parameter group of the first type, or, a number of processing units of a first type occupied by the target parameter group of the first type is related to the priority of the target parameter group of the first type.

23. The method in the second node according to any of claims 19-22, **characterized in that** calculation of one parameter group of the first type occupies at least one processing unit of a first type; the Q1 is greater than 0 and a number of processing units of the first type being occupied used to calculate the Q1 parameter group(s) of the first type is unrelated to the Q1.

24. The method in the second node according to any of claims 19-23, **characterized in that** the Q1 is greater than 1, and a priority of the target parameter group of the first type is used to determine a number of processing units of a first type occupied by the target parameter group of the first type.
